# EUROPEAN PATENT SPECIFICATION

(11) **EP 0 477 367 B1**
(45) Date of publication and mention of the grant of the patent: **12.10.1994**
(21) Application number: 90903945.5
(22) Date of filing: 02.03.1990
(51) Int. Cl.: H02H 9/02

(54) **DEVICE FOR PREVENTING INRUSH CURRENT FROM FLOWING INTO ELECTRIC APPARATUS**
VORRICHTUNG ZUR VERHINDERUNG DES EINSCHALTSTROMES IN ELEKTRISCHE APPARATE
DISPOSITIF POUR EMPECHER LA PENETRATION DE COURANTS DE DEMARRAGE DANS DES APPAREILS ELECTRIQUES

(30) Priority: 02.03.1989 JP 48481/89
(43) Date of publication of application: 01.04.1992
(73) Proprietor: FANUC LTD., Minamitsuru-gun, Yamanashi 401-05 (JP)
(72) Inventor: KONO, Shinichi, Room 7-203 FANUC Manshonharimomi, Minamitsuru-gun, Yamanashi 401-05 (JP); SASUGA, Eiichi, Minamitsuru-gun, Yamanashi 401-05 (JP)
(74) Representative: Overbury, Richard Douglas
(86) International application number: JP9000277
(87) International publication number: WO9010333

(56) References cited:
- DE-A- 2 264 063
- DE-A- 3 122 835
- JP-A-60 156 225
- JP-U- 6 024 195
- US-A- 4 573 113

## Description

The present invention relates to an apparatus for preventing a rush current in various types of electrical devices provided with an alternating current power source, and more particularly but not exclusively, to a rush current preventing apparatus provided in a motor driving device and capable of eliminating an occurrence of a rush current at recovery from an instantaneous stoppage of power supply, to thereby protect the component parts in the circuitry of the motor driving device.

Various types of conventional electrical devices provided with an a.c, power source, for example, a motor driving device, include a rectifier circuit connected to the a.c. power source, and an inverter supplied with d.c. power from the rectifier circuit, and are so arranged as to control the load of the various electrical devices, e.g., the current supplied to the motor, by means of the inverter. In this type of electrical devices, if an instantaneous stoppage of power supply occurs in the a.c. power source, electric power is supplied to the inverter from an electrolytic capacitor which is provided in the rectifier circuit and functions as a smoothing capacitor, and thereafter the voltage across the electrolytic capacitor is gradually reduced. Then, when the power source recovers from the interrupted state, an excessive charging current (rush current) flows through the electrolytic capacitor, which may result in the breakdown of the components in the circuitry of the electrical devices, such as the inverter.

An example of such a conventional electrical device is disclosed in US-A-4,573,113 wherein a rush current preventing apparatus detects an output voltage of the rectifier circuit and bypasses a current limiting resistor, provided in the rectifier circuit, at the conclusion of a power-up period.

Also, DE-A-2264063 discloses the use of current limiting resistors provided in the output phases of an a.c. power source.

An object of the present invention is to provide a rush current preventing apparatus which can eliminate or reduce the application of a rush current to the rectifier circuit at recovery from an instantaneous stoppage of power supply, and thereby protect the component parts in the circuitry of electrical devices equipped with an a.c. power source.

According to the present invention there is provided a rush current preventing apparatus for an electrical device having an a.c. power source and a rectifier circuit connected to the a.c. power source to convert the a.c. power to d.c. power; comprising; a main switch provided between the a.c. power source and the rectifier circuit; and detecting means for detecting an output voltage of the rectifier circuit and for producing a detection output representing a result of comparison between the detected output voltage and a preset voltage; characterised by: series circuit means comprising a current-limiting resistor and an auxiliary switch and provided between the a.c. power source and the rectifier circuit in parallel with the main switch; and switch control means responsive to the detection output from the detecting means to turn on one of the main switch and the auxiliary switch and to turn off the other of these switches.

As described above, according to the present invention, one of the main switch and the auxiliary switch of the series circuit, both provided between the a.c. power source and the rectifier circuit, is turned on and the other of the two is turned off in accordance with the result of the comparison between the output voltage of the rectifier circuit and the preset voltage. Accordingly, when the a.c. power source recovers from an instantaneously interrupted state, the a.c. power source can be connected to the rectifier circuit through the current-limiting resistor of the series circuit means, by turning on the auxiliary switch, and thereafter the main switch is turned on, to thereby connect the a.c. power source to the rectifier circuit through the main switch. Therefore, a rush current can be prevented from occurring at the recovery from an instantaneous interruption of the power supply, thereby preventing the breakdown of the component parts in the circuitry of the electrical device equipped with an a.c. power source.

### Brief Description of the Drawings

Fig. 1 is a circuit diagram schematically showing a principal part of a motor driving device equipped with a rush current preventing apparatus according to one embodiment of the present invention;
Fig. 2 is a flowchart of a switch control process executed by a processor of the rush current preventing apparatus; and
Fig. 3 is a timing chart illustrating operation of various parts of the rush current preventing apparatus.

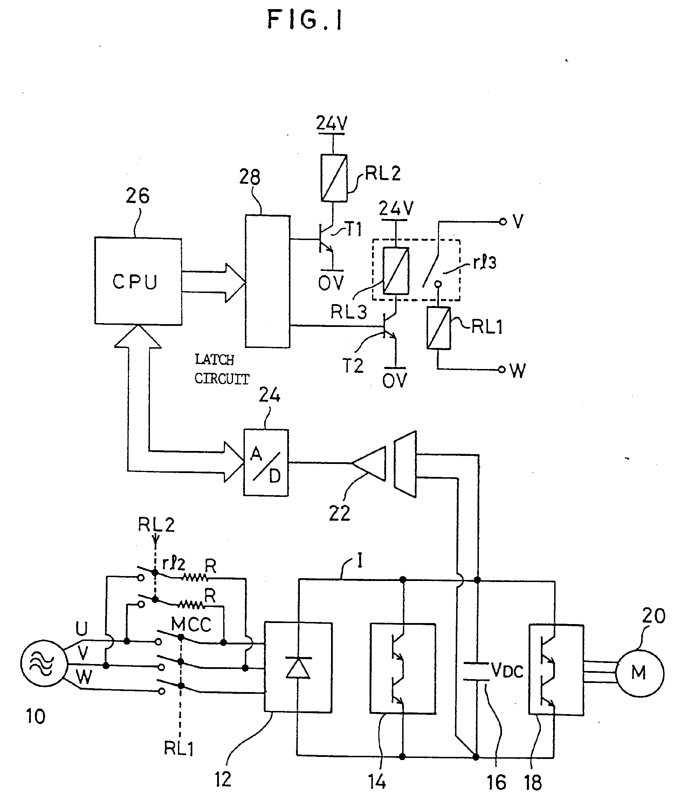

Referring to Fig. 1, a motor driving device provided with a rush current preventing apparatus according to one embodiment of the present invention comprises a three-phase alternating current power source 10 having U-, V- and W-phase output terminals, and a three-phase full-wave rectifier circuit 12 having U-, V- and W-phase input terminals. Between the a.c. power source 10 and the rectifier circuit 12 are provided an electromagnetic contactor MCC and a relay RL2, which respectively serve as a main switch and an auxiliary switch and are connected in parallel to each other.

More specifically, the electromagnetic contactor MCC has three relay contacts interposed between the U-, V- and W-phase output terminals of the a.c. power source 10 and the U-, V- and W-phase input terminals of the full-wave rectifier circuit 12, and a relay RL1 for driving these relay contacts. The relay RL2 has two relay contacts rl2, which are respectively connected at their one ends to the U- and V-phase output terminals of the a.c. power source 10, and connected at the other ends thereof to respective one ends of two current-limiting resistors R and R having other ends thereof respectively connected to the U- and V-phase input terminals of the rectifier circuit 12.

The motor driving device further comprises a power transistor regenerative circuit 14, an electrolytic capacitor 16 for smoothing the output voltage of the rectifier circuit 12, and an inverter circuit 18 supplied with direct current power from the electrolytic capacitor for controlling a motor 20.

The rush current preventing apparatus provided in the motor driving device comprises an isolation amplifier 22 having two input terminals thereof connected to both ends of the electrolytic capacitor 16, respectively, for detecting a voltage (DC link voltage) VDC across the capacitor 16, an A/D converter 24 connected to the output terminal of the amplifier 22, and a processor 26 connected to the A/D converter 24. The rush current preventing apparatus further comprises a latch circuit 28 connected to the processor 26, a first transistor T1 connected to a first output terminal of the latch circuit 28 for switching on and off the relay RL2, and a second transistor T2 connected to a second output terminal of the latch circuit 28 for switching on and off a relay RL3. The relay RL3 has a relay contact rl3 interposed between the V- and W-phase output terminals of the a.c. power source 10. The aforementioned elements 22, 24, 26, 28, RL2, RL3, T1 and T2 are connected to an operating power source provided separately from the a.c. power source 10.

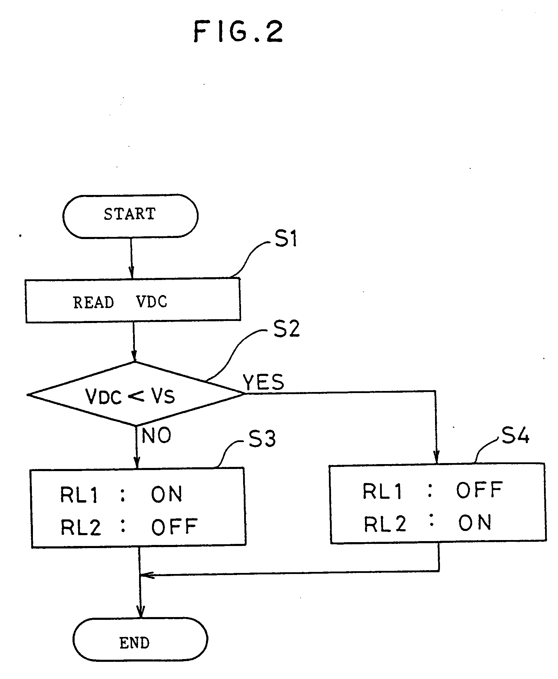

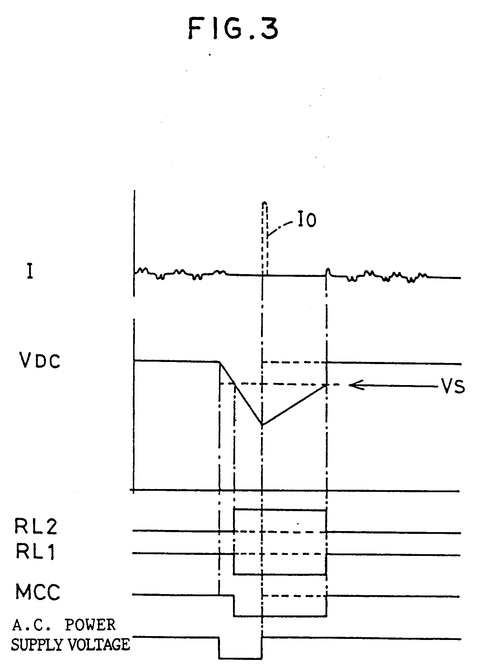

The operation of the motor driving device will be described with reference to Figs. 2 and 3.

While the motor 20 is operated by the motor driving device, the voltage (DC link voltage) VDC across the electrolytic capacitor 16 is detected by the isolation amplifier 22, and an analog output of the amplifier 22 representing the DC link voltage VDC is supplied to the A/D converter 24, which in turn produces a digital output representing the DC link voltage VDC. Meanwhile the processor 26 of the rush current preventing apparatus periodically executes the switch control process shown in Fig. 2.

Specifically, in each processing period, the processor 26 first reads the digital output of the A/D converter 24 representing the DC link voltage VDC (step S1), and determines whether or not the DC link voltage VDC is smaller than a preset voltage VS (step S2). The voltage VS is previously set to a value smaller than the DC link voltage that can be produced in a normal state. Therefore, as far as the DC link voltage is normal, the determination result in step S2 is negative (NO), and thus the flow proceeds to step S3, wherein the processor 26 sends a first control output to the latch circuit 28. In response to the first control output, the latch circuit 28 delivers a low-level output and a high-level output respectively from the first and second output terminals thereof. Accordingly, the first transistor T1 is rendered nonconductive, whereby the relay RL2 is rendered inoperative with the two relay contacts rl2 thereof open. On the other hand, the second transistor T2 is rendered conductive, and thus the relay RL3 is made operative with the relay contact rl3 thereof closed. As a result, the relay RL1 of the electromagnetic contactor MCC is rendered operative with the three associated relay contacts closed, whereby the output terminals associated with the individual phases of the a.c. power source 10 are connected respectively to the input terminals of the individual phases of the rectifier circuit 12 via the relay contacts (main switch) of the electromagnetic contactor MCC. Accordingly, a.c. power supplied from the a.c. power source 10 is rectified into d.c. power in the rectifier circuit 12, and the electrolytic capacitor 16 is charged with the d.c. power. The d.c. power smoothed by the electrolytic capacitor 16 is supplied to the inverter 18, which then drives the motor 20.

If an instantaneous interruption of power supply occurs in the a.c. power source 10 during motor operation and thus the output voltage of the a.c. power source 10 drops to zero, as shown in Fig. 3, the electrolytic capacitor 16 is discharged and the DC link voltage VDC is gradually reduced. When it is determined, at step S2 in a certain detection period after the occurrence of the instantaneous interruption, that the DC link voltage VDC is smaller than the preset voltage VS, the processor 26 sends a second control output to the latch circuit 28 (step S4). In response to the second control output, the latch circuit 28 delivers a high-level output and a low-level output respectively from its first and second output terminals. Accordingly, the first transistor T1 is rendered conductive, and the relay RL2 is rendered operative with the two relay contacts rl2 thereof closed, whereby the U- and V-phase output terminals of the a.c. power source 10 are connected respectively to the U- and V-phase input terminals of the rectifier circuit 12 via the relay contacts rl2 and the current-limiting resistors R and R. On the other hand, the second transistor T2 is rendered nonconductive, and thus the relay RL3 is made inoperative with the relay contact rl3 thereof opened. As a result, the relay RL1 of the electromagnetic contactor MCC is rendered inoperative with the three relay contacts thereof open. As long as the interrupted state of the a.c. power source 10 lasts, the discharging of the electrolytic capacitor 16 continues and thus the DC link voltage VDC is gradually reduced.

Thereafter, when the a.c. power source 10 recovers from the interrupted state, the electrolytic capacitor 16 is charged with the output power of the a.c. power source 10 supplied through the relay contacts (auxiliary switch) rl2 associated with the relay RL2, the current-limiting resistors R and R, and the rectifier circuit 12. At this time, the electric current I supplied from the a.c. power source 10 to the electrolytic capacitor 16 to charge the same is limited by the current-limiting resistors R and R. Accordingly, even at the time of recovery from a power-supply interrupted state in which the DC link voltage VDC is reduced to a low level, an overcurrent I0 (indicated by dashed line in Fig. 3), which is produced when the electrolytic capacitor 16 is charged without current limitation, is prevented, whereby breakdown of the component parts in the circuitry of the motor driving device, e.g., the inverter 18, due to the overcurrent I0 can be prevented. Thereafter, the DC link voltage VDC is gradually increased as the electrolytic capacitor 16 is charged.

When the DC link voltage VDC becomes higher than the preset voltage VS, this is detected in the immediately following detection period (step S2), and step S3 is entered. In step S3, as mentioned above, the first transistor T1 is rendered nonconductive and the relay contacts rl2 associated with the relay RL2 are opened, while the second transistor T2 is rendered conductive and thus the relay contact rl3 of the relay RL3 is closed, whereby a.c. power is supplied from the a.c. power source 10 directly to the rectifier circuit 12, not by way of the current-limiting resistors R and R, and the electrolytic capacitor 16 is charged with the d.c. power supplied from the rectifier circuit 12. At this time, the voltage VDC across the electrolytic capacitor 16 is already increased to a considerably high level, and accordingly, no overcurrent is produced even though the electrolytic capacitor 16 is charged with the power which is not passed through the current-limiting resistors R and R.

The present invention is not limited to the foregoing embodiment, and various modifications may be made.

For instance, although in the embodiment, the rush current preventing apparatus of the present invention is applied to a motor driving device, the invention may be applied to various types of electrical devices equipped with an a.c. power source. In this case, the occurrence of a rush current at recovery from an interrupted state of the a.c. power source of the various electrical devices can be prevented, as in the embodiment, and therefore, the component parts of the circuitry in the various electrical devices can be protected.

## Claims

1. A rush current preventing apparatus for an electrical device having an a.c. power source (10) and a rectifier circuit (12) connected to the a.c. power source (10) to convert the a.c. power to d.c. power;
comprising:
a main switch (MCC) provided between the a.c. power source (10) and the rectifier circuit (12); and
detecting means (26) for detecting an output voltage (VDC) of the rectifier circuit (12) and for producing a detection output representing a result of comparison between the detected output voltage (VDC) and a preset voltage (VS);
characterised by:
series circuit means comprising a current-limiting resistor (R) and an auxiliary switch (RL2) and provided between the a.c. power source (10) and the rectifier circuit (12) in parallel with the main switch (MCC); and
switch control means (28) responsive to the detection output from the detecting means (26) to turn on one of the main switch (MCC) and the auxiliary switch (RL2) and to turn off the other of these switches.

2. A rush current preventing apparatus according to claim 1, wherein said detecting means (26) is operable to produce a first detection output when the detected voltage (VDC) is smaller than the preset voltage (VS), and produce a second detection output when the detected voltage (VDC) is larger than the preset voltage (VS); and said switch control means (28) is responsive to the first detection output to turn off the main switch (MCC) and turn on the auxiliary switch (RL2), and is responsive to the second detection output to turn on the main switch (MCC) and turn off the auxiliary switch (RL2).

3. A rush current preventing apparatus according to claim 1 or 2, wherein said detecting means (26) is coupled on its input side to an electrical device including a capacitor (16) for smoothing a d.c. power supplied from the rectifier circuit (12).

4. A rush current preventing apparatus according to any preceding claim, when applied to a rectifier circuit (12) arranged to supply d.c. power to a motor driving device including an inverter (18) for driving a motor (20).

5. A rush current preventing apparatus according to claims 3 and 4, wherein the inverter (18) is supplied with smoothed d.c. power from the capacitor (16) for driving the motor (20).

## Patentansprüche

1. Vorrichtung zur Verhinderung des Fließens eines Einschaltstroms für eine elektrische Einrichtung, die eine Wechselstromquelle (10) und eine Gleichrichterschaltung (12) hat, die mit der Wechselstromquelle (10) verbunden ist, um einen Wechselstrom in einen Gleichstrom umzuwandeln,
welche Vorrichtung enthält:
einen Hauptschalter (MCC), der zwischen der Wechselstromquelle (10) und der Gleichrichterschaltung (12) vorgesehen ist, und
ein Erfassungsmittel (26) zum Erfassen einer Ausgangsspannung (VDC) der Gleichrichterschaltung (12) und zum Erzeugen eines Erfassungsausgangssignals, das ein Ergebnis eines Vergleichs zwischen der erfaßten Ausgangsspannung (VDC) und einer voreingestellten Spannung (VS) repräsentiert,
**gekennzeichnet** durch
eine Reihenschaltungsanordnung, die einen Strombegrenzungswiderstand (R) und einen Hilfsschalter (RL2) enthält und zwischen der Wechselstromquelle (10) und der Gleichrichterschaltung (12) parallel zu dem Hauptschalter (MCC) vorgesehen ist, und
ein Schaltersteuermittel (28), das auf das Erfassungsausgangssignal aus dem Erfassungsmittel (26) anspricht, um einen Schalter, nämlich den Hauptschalter (MCC) oder den Hilfsschalter (RL2), einzuschalten und den anderen dieser Schalter auszuschalten.

2. Vorrichtung zur Verhinderung des Fließens eines Ein schaltstroms nach Anspruch 1, bei der das Erfassungsmittel (26) betreibbar ist, um ein erstes Erfassungsausgangssignal zu erzeugen, wenn die erfaßte Spannung (VDC) kleiner als die voreingestellte Spannung (VS) ist, und um ein zweites Erfassungsausgangssignal zu erzeugen, wenn die erfaßte Spannung (VDC) größer als die voreingestellte Spannung (VS) ist, und bei der das Schaltersteuermittel (28) auf das erste Erfassungsausgangssignal anspricht, um den Hauptschalter (MCC) auszuschalten und den Hilfsschalter (RL2) einzuschalten, und auf das zweite Erfassungsausgangssignal anspricht, um den Hauptschalter (MCC) einzuschalten und den Hilfsschalter (RL2) auszuschalten.

3. Vorrichtung zur Verhinderung des Fließens eines Einschaltstroms nach Anspruch 1 oder 2, bei der das Erfassungsmittel (26) auf seiner Eingangsseite mit einer elektrischen Einrichtung verbunden ist, die einen Kondensator (16) zum Glätten eines Gleichstroms enthält, welcher von der Gleichrichterschaltung (12) zugeführt wird.

4. Vorrichtung zur Verhinderung des Fließens eines Einschaltstroms nach einem der vorhergehenden Ansprüche, wenn sie auf eine Gleichrichterschaltung (12) angewendet ist, die zur Lieferung einer Gleichstromleistung an eine Motortreibereinrichtung angeordnet ist, welche einen Wechselrichter (18) zum Treiben eines Motors (20) enthält.

5. Vorrichtung zur Verhinderung des Fließens eines Einschaltstroms nach den Ansprüchen 3 und 4, bei der der Wechselrichter (18) mit einem geglätteten Gleichstrom aus dem Kondensator (16) zum Treiben des Motors (20) versorgt wird.

## Revendications

1. Un dispositif pour empêcher la pénétration de courants de démarrage dans un appareil électrique présentant une source d'alimentation en courant alternatif (10) et un circuit redresseur (12) relié à la source d'alimentation en courant alternatif (10) pour transformer l'alimentation en courant alternatif en une alimentation en courant continu ;
comprenant :
un commutateur principal (MCC) prévu entre la source d'alimentation en courant alternatif (10) et le circuit redresseur (12) ; et
des moyens de détection (26) pour détecter une tension de sortie (VDC) du circuit redresseur (12) et pour produire un signal de sortie de détection représentant le résultat de la comparaison entre la tension de sortie détectée (VDC) et une tension réglée au préalable (VS) ;
caractérisé par :
des moyens de circuit série comprenant une résistance (R) de limitation de courant et un commutateur auxiliaire (RL2) et prévus entre la source d'alimentation en courant alternatif (10) et le circuit redresseur (12) en parallèle avec le commutateur principal (MCC) ; et
des moyens (28) de commande des commutateurs sensibles au signal de sortie de détection des moyens de détection (26) pour mettre à l'état passant l'un parmi le commutateur principal (MCC) et le commutateur auxilaire (RL2) et pour mettre à l'état non passant l'autre de ces commutateurs.

2. Un dispositif pour empêcher la pénétration de courants de démarrage selon la revendication 1, dans lequel lesdits moyens de détection (26) sont actionnables pour produire un premier signal de sortie de détection lorsque la tension détectée (VDC) est inférieure à la tension réglée au préalable (VS), et pour produire un second signal de sortie de détection lorsque la tension détectée (VDC) est supérieure à la tension réglée au préalable (VS) ; et dans lequel lesdits moyens (28) de commande des commutateurs sont sensibles au premier signal de sortie de détection pour mettre à l'état non passant le commutateur principal (MCC) et pour mettre à l'état passant le commutateur auxiliaire (RL2), et sont sensibles au second signal de sortie de détection pour mettre à l'état passant le commutateur principal (MCC) et pour mettre à l'état non passant le commutateur auxiliaire (RL2).

3. Un dispositif pour empêcher la pénétration de courants de démarrage selon la revendication 1 ou 2, dans lequel lesdits moyens de détection (26) sont couplés sur leur face d'entrée à un appareil électrique conprenant un condensateur (16) pour lisser une alimentation en courant continu fournie par le circuit redresseur (12).

4. Un dispositif pour empêcher la pénétration de courants de démarrage selon une revendication précédente quelconque, lorsqu'il est appliqué à un circuit redresseur (12) prévu pour fournir une alimentation en courant continu à un appareil de commande de moteur comprenant un inverseur (18) pour entraîner un moteur (20).

5. Un dispositif pour empêcher la pénétration de courants de démarrage selon les revendications 3 et 4. dans lequel l'inverseur (18) reçoit une alimentation en courant continu lissée à partir du condensateur (16) pour entraîner le moteur (20).
